# EUROPÄISCHE PATENTSCHRIFT

(11) **EP 3 374 187 B1**
(45) Veröffentlichungstag und Bekanntmachung des Hinweises auf die Patenterteilung: **08.01.2020**
(21) Anmeldenummer: 16794626.8
(22) Anmeldetag: 11.11.2016
(51) Int. Cl.: B41J 3/407, B41J 11/06, B41J 11/00

(54) **VERFAHREN ZUR ABSICHERUNG EINES DRUCKPROZESSES MIT EINEM DRUCKER UND DRUCKER ZUR DURCHFÜHRUNG DES VERFAHRENS**
METHOD FOR SECURING A PRINTING PROCESS BY MEANS OF A PRINTER, AND PRINTER FOR PERFORMING THE METHOD
PROCÉDÉ DE PROTECTION D'UN PROCESSUS D'IMPRESSION AU MOYEN D'UNE IMPRIMANTE ET IMPRIMANTE PERMETTANT DE METTRE EN UVRE LE PROCÉDÉ

(30) Priorität: 13.11.2015 DE 102015119641
(43) Veröffentlichungstag der Anmeldung: 19.09.2018
(73) Patentinhaber: Phoenix Contact GmbH & Co. KG, 32825 Blomberg (DE)
(72) Erfinder: KLOCKE, Sandra, 32602 Vlotho (DE); SCHIERHOLZ, Albrecht, 32816 Schieder-Schwalenberg (DE); KLAGES, Kilian, 32756 Detmold (DE)
(74) Vertreter: Gesthuysen Patent- und Rechtsanwälte
(86) Internationale Anmeldenummer: PCT/EP2016/077409
(87) Internationale Veröffentlichungsnummer: WO 2017/081235

(56) Entgegenhaltungen:
- DE-A1-102007 036 374
- DE-U1- 20 313 856
- JP-A- 2004 338 338
- DATABASE WPI Week 201271 Thomson Scientific, London, GB; AN 2012-N82198 XP002766622, & CN 102 632 721 A (PRINT-RITE.UNICORN IMAGE PROD CO LTD ZHU) 15. August 2012 (2012-08-15)

## Beschreibung

Die Erfindung betrifft ein Verfahren zur Absicherung eines Druckprozesses mit einem Drucker, wobei der Drucker ein Gehäuse mit einem innerhalb des Gehäuses ausgebildeten Druckraum, eine Druckvorrichtung, eine Aufnahmevorrichtung für ein der Aufnahme des zu bedruckenden Bedruckungsobjekts dienendes auswechselbares Magazin, eine Steuer- und Auswerteeinheit und einen Speicher aufweist. Daneben betrifft die Erfindung noch einen entsprechenden Drucker zur Durchführung des Verfahrens.

In der industriellen und gewerblichen Praxis werden zur Kennzeichnung und Beschriftung von Maschinen, Geräten, Klemmen, Kabeln oder Leitern unterschiedliche Arten von Kennzeichnungs- und Markierungsschildern verwendet, auf denen Informationen bezüglich der Bauteile, denen sie zugeordnet werden, aufgebracht sind. Hierzu werden die Kennzeichnungs- oder Markierungsschilder üblicherweise in einem Drucker mit einem entsprechenden Druckmuster, in der Regel alphanumerischen Zeichen, versehen. Für die Markierung werden unterschiedliche Drucker mit unterschiedlichen Druckverfahren verwendet, beispielsweise Tintenstrahldrucker, Thermotransferdruckers oder UV-Drucker. Derartige Markierungsdrucker sind beispielsweise aus dem Katalog "Markierungssysteme Werkzeuge Montagematerial, 2013 /2014", Seiten 28 bis 37 der Phoenix Contact GmbH & Co. KG bekannt.

In der Praxis werden häufig Bedruckungsobjekte in Kartenformat verwendet, die eine Mehrzahl von einzelnen Markierungsschildern aufweisen. Die Bedruckungsobjekte, die häufig auch als Marker bezeichnet werden, sind dabei insbesondere als Kunststoffspritzteile oder als Kunststoffstanzteile ausgebildet. Bei Kunststoffspritzteilen, die auch als Universal Card Material (UniCard oder UC-Material) bezeichnet werden, sind die Markierungsschilder über Stege in einem äußeren Rahmen befestigt. Nach dem Bedrucken können die einzelnen Markierungsschilder, die häufig zur Leiter- und Kabelmarkierung oder zur Klemmenmarkierung verwendet werden, vom Rahmen abgetrennt werden. Bei Kunststoffstanzteilen, die auch als Universal Sheet Material (UniSheet oder US-Material) bezeichnet werden, bilden mehrere Reihen von Markierungsschildern zusammen einen Marker, wobei nach dem Bedrucken des US Materials die einzelnen Markierungsschilder voneinander getrennt werden können.

Darüber hinaus können mehrere Kennzeichnung- oder Markierungsschilder auch auf einem gemeinsamen Trägerbogen aufgebracht, insbesondere aufgeklebt werden, von dem die einzelnen Kennzeichnungs- oder Markierungsschilder nach der Markierung einfach abgezogen werden können. Derartige Trägerbögen werden in der Praxis häufig auch als Beschriftungsbögen oder Etikettenbögen bezeichnet.

Nachfolgend werden die unterschiedlichen Arten von Markern allgemein als Bedruckungsobjekte bezeichnet, wobei die Bedruckungsobjekte aus unterschiedlichen Materialien, insbesondere unterschiedlichen Kunststoffen, bestehen und unterschiedliche Abmessungen, insbesondere unterschiedlichen Materialstärken aufweisen können. Um die unterschiedlichen Bedruckungsobjekte mit ihren unterschiedlichen Abmessungen von einem Drucker bedrucken zu können, werden die einzelnen Bedruckungsobjekte bei dem vorliegenden Verfahren bzw. dem in Rede stehenden Drucker in ein für das Bedruckungsobjekt passendes Magazin eingelegt bzw. eingesetzt. Wenn alle Magazine die gleichen Außenabmessungen aufweisen, kann jedes Magazin in die Aufnahmevorrichtung des Druckers eingesetzt werden, die nach Art einer Schublade zwischen einer Be- und Entladeposition außerhalb des Druckraums und einer Druckposition innerhalb des Druckraums verfahren werden kann.

Zum Bedrucken derartiger Bedruckungsobjekte haben sich Thermotransferdrucker als besonders geeignet herausgestellt. Beim Thermotransferdruck wird eine spezielle, mit temperaturempfindlicher Farbe beschichtete Folie zwischen dem Bedruckungsobjekt und einem Thermodruckkopf als Druckvorrichtung hindurchgeführt, wobei die Folie als Farbband in einer entsprechenden Druckerkassette angeordnet ist. Mit dem Thermotransferdruck lassen sich ein exakter Farbaufdruck und eine hohe Druckqualität bei einem hohen Oberflächenglanz erzeugen. Hierfür ist es jedoch erforderlich, dass die Druckparameter, wie Temperatur, Druckgeschwindigkeit, Material und Dicke des Bedruckungsobjekts sowie des Farbbandes genau aufeinander abgestimmt werden.

Da bei dem in Rede stehenden Drucker, bei dem es sich vorzugsweise um einen Thermotransferdrucker handelt, eine Vielzahl von unterschiedlichen Bedruckungsobjekten, daraus resultierend auch eine Mehrzahl von unterschiedlichen Magazinen und darüber hinaus auch noch mehrere unterschiedliche Druckerkassetten mit unterschiedlichen Farbbändern verwendet werden können, besteht trotz entsprechender Beschriftung der einzelnen Komponenten die Gefahr, dass der Benutzer den Drucker mit Komponenten verwendet, die nicht entsprechend aufeinander abgestimmt sind.

Aus der DE 10 2010 037 564 A1 ist ein Bedruckungsobjekt für einen Thermotransferdrucker bekannt, bei dem das Bedruckungsobjekt als Kennzeichnung eine Strichcode-Kennzeichnung mit einer Mehrzahl von hintereinander angeordneten Einzelstrichen aufweist, wobei die Kennzeichnung von einem im Drucker angeordneten optischen Sensor erfasst wird. Bei Verwendung der aus der DE 10 2010 037 564 A1 bekannten Bedruckungsobjekte kann somit sichergestellt werden, dass der eigentliche Druckvorgang nur dann ausgeführt wird, wenn der Benutzer das richtige Bedruckungsobjekt in den Drucker eingelegt hat. Dennoch hat es sich in der Praxis herausgestellt, dass es in einzelnen Fällen zu einer Bedruckung der Bedruckungsobjekte mit unbefriedigender Bedruckungsqualität kommt, obwohl entsprechend gekennzeichnete Bedruckungsobjekte verwendet worden sind.

Ein Verfahren nach dem Oberbegriff des Anspruchs 1 ist aus dem Dokument JP 2004 338338 A bekannt.

Der vorliegenden Erfindung liegt daher die Aufgabe zugrunde, ein eingangs beschriebenes Verfahren zur Absicherung eines Druckprozesses mit einem Drucker, insbesondere einem Thermotransferdrucker anzugeben, bei dem auf einfache und sichere Weise gewährleistet ist, dass die Bedruckung des ausgesuchten Bedruckungsobjekts in der gewünschten hohen Qualität erfolgt. Es soll somit eine zuverlässige Absicherung erfolgen, durch die verhindert wird, dass die Bedruckung eines Bedruckungsobjekt eine schlechte Qualität aufweist. Darüber hinaus liegt der Erfindung die Aufgabe zugrunde, einen entsprechenden Drucker zur Durchführung des Verfahrens zur Verfügung zu stellen.

Die Aufgabe ist bei dem erfindungsgemäßen Verfahren mit den Merkmalen des Patentanspruchs 1 gelöst.

Erfindungsgemäß ist zunächst herausgefunden worden, dass die Qualität der auf dem Bedruckungsobjekt aufgedruckten Druckmuster nicht nur davon abhängt, dass in dem Drucker tatsächlich das Bedruckungsobjekt eingelegt ist, zu dem im Drucker aktuell die passenden Druckparameter, wie Drucktemperatur und Druckgeschwindigkeit vorliegen bzw. eingestellt sind. Überraschenderweise ist dabei festgestellt worden, dass die Druckqualität auch davon abhängt, dass ein Magazin in der Aufnahmevorrichtung angeordnet ist, das für das zu bedruckende Bedruckungsobjekt explizit vorgesehen ist.

Da die einzelnen Bedruckungsobjekte teilweise unterschiedliche Abmessungen aufweisen, sind in den einzelnen Magazinen an die unterschiedlichen Bedruckungsobjekte angepasste Auflageflächen ausgebildet. Daher erscheint es zunächst verwunderlich, dass eine falsche Zuordnung von Bedruckungsobjekt und Magazin überhaupt möglich ist. Im Rahmen der vorliegenden Erfindung ist jedoch herausgefunden worden, dass es bei einer entsprechend großen Anzahl an unterschiedlichen Bedruckungsobjekten und einer Mehrzahl von unterschiedlichen Magazinen gleichwohl vorkommen kann, dass einzelne Bedruckungsobjekte vom Benutzer mechanisch in einzelne Magazine eingesetzt werden können, die nicht zur Verwendung mit diesen Bedruckungsobjekten vorgesehen sind. Dies kann beispielsweise daran liegen, dass die Abmessungen der in dem Magazin ausgebildeten Auflagefläche nur geringfügig von der Abmessung des eingesetzten Bedruckungsobjekts abweicht, so dass das Bedruckungsobjekt vom Benutzer fälschlicherweise in das Magazin eingesetzt wird.

Ist die Abmessung der im Magazin ausgebildeten Auflagefläche geringfügig größer als die Abmessung des eingesetzten Bedruckungsobjekts, so kann es bei Vibrationen zu einem Verrutschen oder zu kleineren Bewegungen des Bedruckungsobjekts in dem ausgewählten Magazin kommen, was sich negativ auf die Druckqualität auswirkt. Ebenso kann es vorkommen, dass die Tiefe der Auflagefläche in dem Magazin nicht exakt auf die Materialstärke des Bedruckungsobjekts abgestimmt ist, so dass beim Bedruckungsvorgang der Abstand zwischen dem Bedruckungsobjekt und der Druckvorrichtung, insbesondere dem Thermodruckkopf eines Thermotransferdruckers, nicht dem eigentlich vorgesehene optimalen Abstand entspricht. Auch dies kann zu einer verschlechterten Druckqualität, partiell sogar zu Druckaussetzern auf dem Bedruckungsobjekt führen.

Dadurch, dass bei dem erfindungsgemäßen Verfahren automatisch überprüft wird, ob ein für das zu bedruckende Bedruckungsobjekt vorgesehenes und damit zulässiges Magazin in der Aufnahmevorrichtung angeordnet ist, kann somit verhindert werden, dass ein Bedruckungsobjekt in schlechterer Druckqualität bedruckt wird, weil vom Benutzer versehentlich ein nicht für das ausgewählte Bedruckungsobjekt vorgesehenes Magazin in die Aufnahmevorrichtung eingesetzt worden ist.

Durch die Verwendung eines optischen Sensors, insbesondere eines Reflexlicht-Tasters, kann dabei auf einfache und kostengünstige Art und Weise eine an dem Magazin entsprechend angebrachte oder angeordnete Kennzeichnung, erfasst werden. Bei der Kennzeichnung handelt es sich vorzugsweise um eine Strichcode-Kennzeichnung, bestehend aus mehreren Einzelstrichen. Ist die Erstreckung der Strichcode-Kennzeichnung parallel zur Bewegungsrichtung der Aufnahmevorrichtung angeordnet, so ist zur Erfassung einer derartigen Strichcode-Kennzeichnung ein einziger, fest im Gehäuse angeordneter optischer Sensor ausreichend, da dann beim Einfahren der Aufnahmevorrichtung aus der Be- und Entladeposition in den Druckraum die Strichcode-Kennzeichnung an dem optischen Sensor vorbeibewegt wird.

Die derart von den Sensor erfasste Kennzeichnung an dem Magazin, die einem dem Magazin zugeordneten Code entspricht, wird dann in der Steuer- und Auswerteeinheit mit im Speicher abgelegten Kennzeichnungen verglichen, die Magazinen zugeordnet sind, die für das zu bedruckende Bedruckungsobjekt vorgesehen und damit geeignet sind. Ergibt der in der Steuer- und Auswerteeinheit vorgenommene Vergleich, dass die vom Sensor erfasste Kennzeichnung des eingesetzten Magazins nicht mit einer der im Speicher gespeicherten Kennzeichnungen für ein zulässiges Magazin übereinstimmt, so wird eine entsprechende Fehlermeldung ausgegeben.

Bei der Fehlermeldung kann es sich beispielsweise um das Aufleuchten einer entsprechenden Anzeige oder um einen Warnton handeln. Gemäß einer bevorzugten Ausgestaltung des erfindungsgemäßen Verfahrens ist vorgesehen, dass die Initialisierung des Druckvorgangs fortgesetzt wird, wenn der in der Auswerteeinheit durchgeführte Vergleich der von dem Sensor erfassten Kennzeichnung des eingesetzten Magazins mit der im Speicher gespeicherten Kennzeichnung keine Abweichung ergibt. Ein gewünschter Druckvorgang wird somit automatisch gestartet, indem beispielsweise die zum Bedrucken erforderlichen Druckdaten und Druckparameter eingestellt werden, wenn von der Steuer- und Auswerteeinheit des Druckers festgestellt worden ist, dass ein zu dem ausgewählten Bedruckungsobjekt passendes Magazin in der Aufnahmevorrichtung eingesetzt ist.

Gemäß einer vorteilhaften Ausgestaltung des erfindungsgemäßen Verfahrens erfolgt nicht nur eine automatische Überprüfung des eingesetzten Magazins, sondern auch eine automatische Überprüfung des in diesem Magazin eingelegten Bedruckungsobjekts. Hierzu wird von einem im Gehäuse angeordneten optischen Sensor eine am Bedruckungsobjekt angeordnete Kennzeichnung beim Einfahren der Aufnahmevorrichtung in den Druckraum erfasst. Anschließend erfolgt ein entsprechender Vergleich der vom Sensor erfassten Kennzeichnung des eingelegten Bedruckungsobjekts mit einer im Speicher gespeicherten Kennzeichnung für das zu bedruckende Bedruckungsobjekt in der Steuer- und Auswerteeinheit sowie die Ausgabe einer Fehlermeldung, wenn die vom Sensor erfasste Kennzeichnung des eingelegten Bedruckungsobjekts nicht mit der im Speicher abgelegten Kennzeichnung für das zu bedruckende Bedruckungsobjekt übereinstimmt.

Gemäß einer weiteren bevorzugten Ausgestaltung des erfindungsgemäßen Verfahrens wird darüber hinaus auch die in den Drucker eingesetzte Druckerkassette daraufhin überprüft, ob es sich um eine für das ausgewählte Bedruckungsobjekt geeignete und damit zulässige Druckerkassette handelt. Nach dem Einsetzen einer eine entsprechende Kennzeichnung aufweisenden auswechselbaren Druckerkassette in das Gehäuse des Druckers wird mittels mindestens eines weiteren im Gehäuse angeordneten optischen Sensors die Kennzeichnung der Druckerkassette erfasst. Dann erfolgt ein entsprechender Vergleich der von dem mindestens einen optischen Sensor erfassten Kennzeichnung der eingelegten Druckerkassette mit einer im Speicher abgelegten Kennzeichnung für eine für das zu bedruckende Bedruckungsobjekt zulässige Druckerkassette in der Steuer- und Auswerteeinheit. Anschließend wird dann eine Fehlermeldung ausgegeben, wenn die vom Sensor erfasste Kennzeichnung der eingesetzten Druckerkassette nicht mit der im Speicher gespeicherten Kennzeichnung für eine zulässige Druckerkassette übereinstimmt.

Erfolgt bei dem erfindungsgemäßen Verfahren - gemäß der bevorzugten Ausgestaltung - eine automatische Überprüfung des eingesetzten Magazins, des eingelegten Bedruckungsobjekts und der eingesetzten Druckerkassette, so erfolgt damit eine automatische Überprüfung, ob alle für den Druckvorgang benötigten Komponenten, die vom Benutzer ausgewählt und eingesetzt werden müssen, für den durchzuführenden Druckprozess zulässig sind. Dadurch wird nicht nur überprüft, ob der Benutzer eine einzelne einzusetzende Komponente, beispielsweise das Bedruckungsobjekt, richtig ausgewählt hat, sondern es wird automatisch überprüft, ob die vom Benutzer ausgewählte Kombination der einzelnen Komponenten zulässig ist. Dadurch erfolgt eine Absicherung des Druckprozesses, durch die verhindert wird, dass ein Bedruckungsobjekt bedruckt wird, obwohl die vom dem Benutzer in den Drucker eingesetzten Komponenten nicht aufeinander abgestimmt sind, was zu einem Druck mit verminderter Qualität führen kann.

Zur Durchführung eines Druckvorgangs werden dem Drucker nach dem Festlegen des zu bedruckenden Bedruckungsobjekts sowie der Eingabe der zu druckenden Informationen die für den Druckvorgang erforderlichen Druckdaten und Druckparameter von der den Druckvorgang steuernden Software zur Verfügung gestellt. Gemäß einer bevorzugten Ausgestaltung des Verfahrens wird dabei nach der Festlegung des zu bedruckenden Bedruckungsobjekts auch die Kennzeichnung des Bedruckungsobjekts sowie die Kennzeichnung der für das Bedruckungsobjekt zulässigen Magazine und Druckerkassetten im Speicher hinterlegt. Nach dem Einsetzen der Druckerkassette in den Drucker sowie dem Einsetzen eines Magazins mit dem zu bedruckenden Bedruckungsobjekt in die Aufnahmevorrichtung und dem Einfahren der Aufnahmevorrichtung in den Druckraum können dann die von den jeweiligen Sensoren erfassten Kennzeichnungen der verwendeten Komponenten - Magazin, Bedruckungsobjekt, Druckerkassette - mit den im Speicher hinterlegten entsprechenden Kennzeichnungen in der Auswerteeinheit verglichen werden.

Wie zuvor bereits ausgeführt worden ist, erfolgt bei dem erfindungsgemäßen Verfahren die Ausgabe einer Federmeldung, wenn eine von einem Sensor erfasste Kennzeichnung nicht mit der entsprechenden im Speicher gespeicherten Kennzeichnung übereinstimmt. Bei der Fehlermeldung handelt es sich dabei vorzugsweise um eine entsprechende Anzeige in einem Display des Druckers. Zum Fortführen des Druckprozesses kann dabei vorgesehen sein, dass die Fehlermeldung vom Benutzer aktiv quittiert werden muss, eine weitere Bearbeitung des Druckprozesses somit unterbrochen ist, bis der Benutzer die Fehlermeldung quittiert und den Fehler behoben hat.

Darüber hinaus kann als weiterer Verfahrensschritt auch vorgesehen sein, dass dann, wenn bei dem in der Auswerteeinheit durchgeführten Vergleich der Kennzeichnungen eine Abweichung festgestellt worden ist, die Aufnahmevorrichtung aus dem Druckraum in die Be- und Entladeposition außerhalb des Druckraums fährt. Der Benutzer kann dann direkt das beanstandete Magazin oder das beanstandete Bedruckungsobjekt entnehmen und durch ein zulässiges Magazin oder das richtige Bedruckungsobjekt austauschen. Hierbei ist es besonderes vorteilhaft, wenn dem Benutzer durch eine entsprechende Fehlermeldung mitgeteilt wird, welche Komponente - Magazin und/oder Bedruckungsobjekt - ausgetauscht werden muss.

Die eingangs genannte Aufgabe ist bei einem Drucker zur Durchführung des erfindungsgemäßen Verfahrens mit den Merkmalen des Patentanspruchs 7 gelöst. Der Drucker weist ein Gehäuse, mit einem innerhalb des Gehäuses ausgebildeten Druckraum, eine Druckvorrichtung, eine Aufnahmevorrichtung, eine Steuer- und Auswerteeinheit und einen Speicher auf. Die Aufnahmevorrichtung dient dabei zur Aufnahme eines auswechselbaren Magazins, in dem das zu bedruckende Bedruckungsobjekt angeordnet ist, wobei die Aufnahmevorrichtung zwischen einer Be- und Entladeposition außerhalb des Druckraums und einer Druckposition innerhalb des Druckraums verfahrbar ist.

Erfindungsgemäß ist in dem Gehäuse mindestens ein optischer Sensor zur Erfassung einer an einem Magazin angeordneten Kennzeichnung vorgesehen, so dass von dem Sensor die Kennzeichnung erfasst werden kann, wenn das in der Aufnahmevorrichtung eingesetzte Magazin aus der Be- und Entladeposition außerhalb des Druckraums in den Druckraum einfährt. Die Steuer- und Auswerteeinheit des Druckers ist dabei dazu ausgebildet, einen Vergleich der von dem Sensor erfassten Kennzeichnung des Magazins mit einer im Speicher gespeicherten Kennzeichnung für ein Magazin durchzuführen, das für das zu bedruckende Bedruckungsobjekt vorgesehen und damit zulässig ist. Darüber hinaus wird von der Steuer- und Auswerteeinheit eine Fehlermeldung initiiert, wenn der durchgeführte Vergleich eine Abweichung zwischen der erfassten Kennzeichnung und der gespeicherten Kennzeichnung ergibt. Bezüglich der Vorteile des erfindungsgemäß ausgebildeten Druckers, bei dem es sich vorzugsweise um einen Thermotransferdrucker handelt, wird auf die vorherigen Ausführungen im Zusammenhang mit dem erfindungsgemäßen Verfahren verwiesen.

Gemäß einer bevorzugten Ausgestaltung des erfindungsgemäßen Druckers ist im Gehäuse noch mindestens ein weiterer optischer Sensor zur Erfassung einer am Bedruckungsobjekt angeordneten Kennzeichnung vorgesehen. Da sich das Bedruckungsobjekt zusammen mit dem Magazin in der Aufnahmevorrichtung befindet, ist die Verwendung eines einzigen optischen Sensors zur Erfassung der Kennzeichnung des Bedruckungsobjekts ausreichend, da sich das Bedruckungsobjekt beim Einfahren der Aufnahmevorrichtung in die Druckposition innerhalb des Druckraums bei entsprechender Anordnung des optischen Sensors am optischen Sensor vorbei bewegt.

Grundsätzlich ist dabei die Verwendung eines einzigen optischen Sensors sowohl zur Erfassung der Kennzeichnung des Magazin als auch zur Erfassung der Kennzeichnung des Bedruckungsobjekts ausreichend, wenn die Kennzeichnung am Bedruckungsobjekt und am Magazin so zueinander angeordnet sind, dass sie beim Einfahren des Transportschlittens nacheinander den optischen Sensor passieren. Gemäß einer alternativen, bevorzugten Ausgestaltung des erfindungsgemäßen Druckers sind zur Erfassung der Kennzeichnung am Magazin und zur Erfassung der Kennzeichnung am Bedruckungsobjekt jedoch zwei optische Sensoren vorgesehen, die vorzugsweise so innerhalb des Gehäuses zueinander angeordnet sind, dass ihre optischen Achsen im Wesentlichen senkrecht zueinander verlaufen. Verläuft die Bewegungsrichtung der Aufnahmevorrichtung horizontal, so bedeutet dies, dass die optische Achse des einen Sensors ebenfalls horizontal ausgerichtet ist, während die optische Achse des anderen Sensors vertikal verläuft.

Bei einer besonders bevorzugten Ausgestaltung ist in dem Gehäuse des Druckers darüber hinaus mindestens ein weiterer optischer Sensor zur Erfassung einer an einer auswechselbaren Druckerkassette angeordneten Kennzeichnung vorgesehen. In der Auswerteeinheit erfolgt dann ein Vergleich der vom Sensor erfassten Kennzeichnung der eingesetzten Druckerkassette mit einer im Speicher gespeicherten Kennzeichnung für eine Druckerkassette, die für das zu bedruckende Bedruckungsobjekt geeignet ist. Handelt es sich bei der Kennzeichnung gemäß einer vorteilhaften Ausgestaltung um eine Strichcode-Kennzeichnung, die sich aus mehreren nebeneinander angeordneten Einzelstrichen ergibt, so kann die Erkennung der Strichcode-Kennzeichnung mit einem optischen Sensor dadurch erfolgen, dass der optische Sensor bewegbar innerhalb des Gehäuses des Druckers angeordnet ist. Die Bewegungsrichtung des Sensors muss dann der Erstreckungsrichtung der Strichcode-Kennzeichnung entsprechen. Damit wird berücksichtigt, dass die Druckerkassette - im Unterschied zu dem in der Aufnahmevorrichtung eingesetzten Magazins und dem Bedruckungsobjekt - stationär im Gehäuse angeordnet ist, sich somit nicht an einem stationär angeordneten Sensor vorbeibewegt.

Bevorzugt werden jedoch anstelle eines beweglich angeordneten optischen Sensors mehrere optische Sensoren verwendet, die nebeneinander im Gehäuse angeordnet sind, wobei die Anordnung der Sensoren der Erstreckung der Kennzeichnung, insbesondere der Anordnung der Einzelstriche einer Strichcode-Kennzeichnung entspricht. Weist die Strichcode-Kennzeichnung beispielsweise sechs nebeneinander angeordnete Einzelstriche auf, so sind dann auch sechs optische Sensoren nebeneinander im Gehäuse angeordnet, wobei sich jeder Einzelstrich innerhalb des Erfassungsbereichs eines optischen Sensors befindet, wenn die Druckerkassette im Gehäuse richtig angeordnet ist.

Die einzelnen Kennzeichnungen, die an den von einem Benutzer einzusetzenden Komponenten angeordnet sind, sind vorzugsweise als Strichcode-Kennzeichnungen ausgebildet. Die einzelnen Strichcode-Kennzeichnungen weisen dabei mehrere hintereinander angeordnete Einzelstriche auf, die jeweils eine vorbestimmte Längserstreckung und Breite aufweisen. Typischerweise sind dabei zwei Arten von Einzelstrichen vorgesehen, nämlich einerseits helle, insbesondere weiße Einzelstriche, und andererseits dunkle, insbesondere schwarze Einzelstriche, so dass ein maximaler Kontrast zwischen den beiden Arten von Einzelstrichen gegeben ist. Die einzelnen Markierungen können dann auf besonders einfache Art und Weise von einem Reflexlicht-Taster als optischen Sensor erfasst werden.

Im Einzelnen gibt es nun eine Vielzahl von Möglichkeiten, das erfindungsgemäße Verfahren sowie den erfindungsgemäßen Drucker auszugestalten und weiterzubilden. Dazu wird verwiesen sowohl auf die den Patentansprüchen 1 und 7 nachgeordneten Patentansprüche, als auch auf die nachfolgende Beschreibung bevorzugte Ausführungsbeispiele in Verbindung mit der Zeichnung. In der Zeichnung zeigen
- Fig. 1: einen Drucker in schematischer Darstellung, im Querschnitt und im Längsschnitt,
- Fig. 2: eine schematische Darstellung einer Aufnahmevorrichtung des Druckers, von der Seite
- Fig. 3: ein erstes bevorzugte Ausführungsbeispiel eines Bedruckungsobjekts,
- Fig. 4: ein zweites Ausführungsbeispiel eines Bedruckungsobjektes,
- Fig. 5: eine Druckerkassette eines Druckers, in perspektivischer Darstellung, und
- Fig. 6: ein Ausführungsbeispiel eines Druckers, in perspektivischer Darstellung.

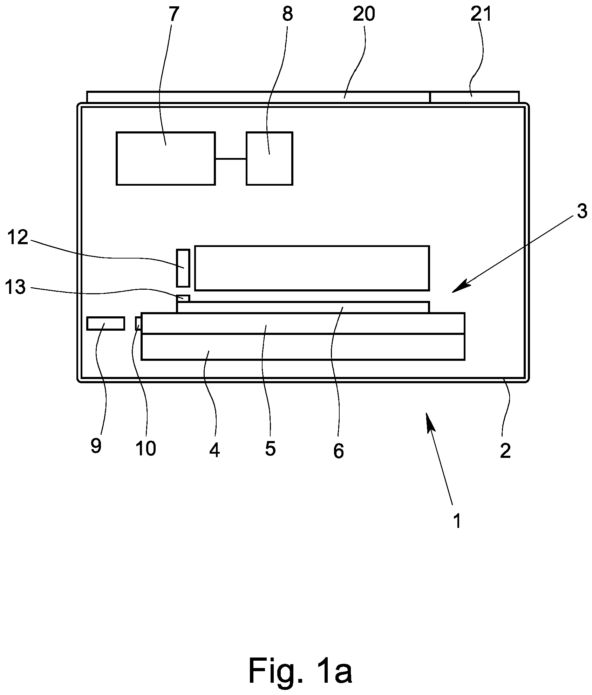

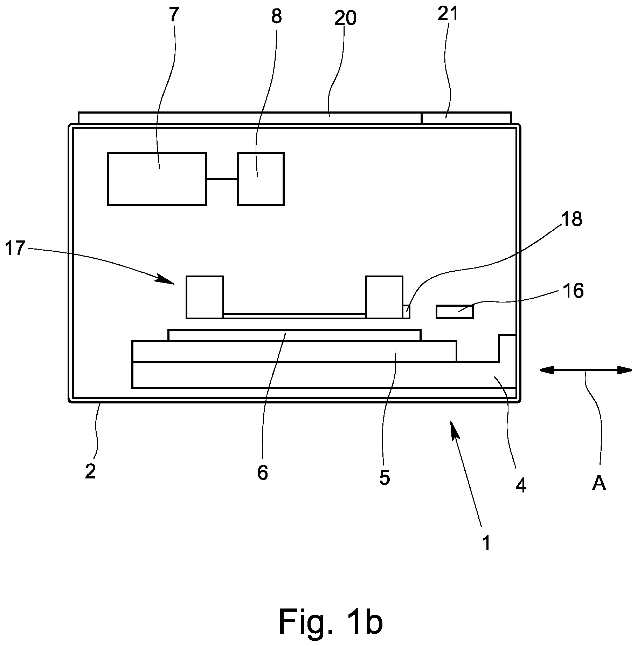

Fig. 1 zeigt einen Drucker 1 gemäß der vorliegenden Erfindung in schematischer Darstellung, im Querschnitt (Fig. 1a) und im Längsschnitt (Fig. 1b). Der Drucker 1 dient zur Durchführung des erfindungsgemäßen Verfahrens, wobei es sich bei dem Drucker 1 vorzugsweise um einen Thermotransferdrucker handelt. Der Drucker 1 weist ein Gehäuse 2 auf, in dem ein Druckraum 3 ausgebildet ist. Eine nach Art einer Schublade oder eines Transportschlittens ausgebildete Aufnahmevorrichtung 4 kann zwischen einer Be- und Entladeposition außerhalb des Druckraums 3 und einer Druckposition innerhalb des Druckraums 3 verfahren werden. Die Bewegungsrichtung der Aufnahmevorrichtung 4 verläuft dabei in Fig. 1a in die Zeichnungsebene und in Fig. 1b in Richtung des Pfeils A, wobei in beiden Darstellungen gemäß Fig. 1 die Aufnahmevorrichtung 4 innerhalb des Druckraums 3, also in der Druckposition, angeordnet ist.

Die Aufnahmevorrichtung 4 dient zur Aufnahme eines Magazins 5, in das das jeweils zu bedruckende Bedruckungsobjekt 6 eingelegt werden kann. Dadurch ist gewährleistet, dass das zu bedruckende Bedruckungsobjekt 6 auf einfache und komfortable Art und Weise in den Druckraum 3 eingeführt werden kann und darüber hinaus dort auch stets in einer vorgegebenen Position angeordnet ist. Damit mit dem Drucker 1 unterschiedliche Bedruckungsobjekte 6 bedruckt werden können, ist die Aufnahmevorrichtung 4 zur Aufnahme eines auswechselbaren Magazins 5 ausgebildet, in das das zu bedruckende Bedruckungsobjekt 6 eingelegt werden kann. Soll ein bestimmtes Bedruckungsobjekt 6 bedruckt werden, so wird dieses in ein für das Bedruckungsobjekt 6 vorgesehenes Magazin 5 eingelegt und das Magazin 5 mit dem Bedruckungsobjekt 6 in die Aufnahmevorrichtung 4 eingesetzt, wozu sich diese in ihrer Be- und Entnahmeposition außerhalb des Druckraums 3 befindet. Natürlich kann ebenso gut auch zunächst das Magazin 5 in die Aufnahmevorrichtung 4 eingesetzt und dann das Bedruckungsobjekt 6 in das Magazin 5 eingelegt werden.

Zur Steuerung des Druckvorgangs sind in dem Drucker 1 darüber hinaus noch eine Steuer- und Auswerteeinheit 7 sowie ein mit der Steuer- und Auswerteeinheit 7 verbundener Speicher 8 angeordnet, die beide in Fig. 1 nur schematisch dargestellt sind. Die Steuer- und Auswerteeinheit 7 kann dabei insbesondere auch zur Kommunikation mit einem externen Rechner ausgebildet sein, so dass die zur Durchführung eines Druckvorgangs benötigten Druckdaten und Druckparameter dem Drucker 1 bzw. der Steuer- und Auswerteeinheit 7 von dem externen Rechner als Druckdatenstrom übermittelt werden können.

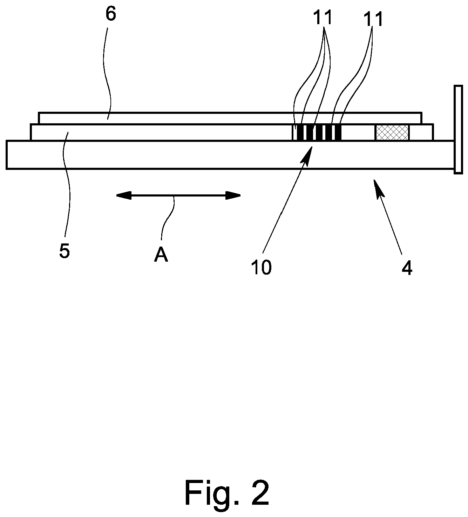

Wie aus Fig. la erkennbar ist, ist in dem Gehäuse 2 des Druckers 1 ein optischer Sensor 9 angeordnet, der der Erfassung einer an dem Magazin 5 angebrachten Kennzeichnung 10 dient. Bei der Kennzeichnung 10 kann es sich dabei gemäß Fig. 2 vorzugsweise um eine Strichcode-Kennzeichnung handeln, so dass als optischer Sensor 9 ein einfacher Reflexlicht-Taster verwendet werden kann. Dadurch, dass die optische Achse des optischen Sensors 9 senkrecht zur Bewegungsrichtung A der Aufnahmevorrichtung 4 ausgerichtet ist, wird die an dem Magazin 5 angeordnete Strichcode-Kennzeichnung 10 am Sensor 9 vorbeigeführt, wenn die Aufnahmevorrichtung 4 aus der Be- und Entladeposition in die Druckposition innerhalb des Druckraums 3 verfahren wird. Dadurch ist es ausreichend, nur einen optischen Sensor 9 zur Erfassung der aus mehreren hintereinander angeordneten Einzelstrichen 11 bestehenden Strichcode-Kennzeichnung 10 zu verwenden.

Der Drucker 1 weist darüber hinaus noch einen weiteren optischen Sensor 12 zur Erfassung einer am Bedruckungsobjekt 6 angeordneten Kennzeichnung 13 auf. Da sich auch die Längserstreckung der Kennzeichnung 13 des Bedruckungsobjekts 6 parallel zur Bewegungsrichtung A der Aufnahmevorrichtung 4 erstreckt, kann auch die Kennzeichnung 13 mit einem stationär angeordneten Sensor 12 erfasst werden, dessen optische Achse senkrecht zur Bewegungsrichtung A der Aufnahmevorrichtung 4 ausgerichtet ist. Der optische Sensor 9 zur Erfassung der Kennzeichnung 10 des Magazins 5 und der optische Sensor 12 zur Erfassung der Kennzeichnung 13 des Bedruckungsobjekts 6 sind dabei derart im Gehäuse 2 des Druckers 1 angeordnet, dass ihre optischen Achsen senkrecht zueinander verlaufen. Wie aus Fig. 1a ersichtlich ist, ist dazu die Kennzeichnung 10 an einer Seitenfläche des Magazins 5 angeordnet, während die Kennzeichnung 13 des Bedruckungsobjekts 6 auf oder in dessen Oberfläche angebracht ist.

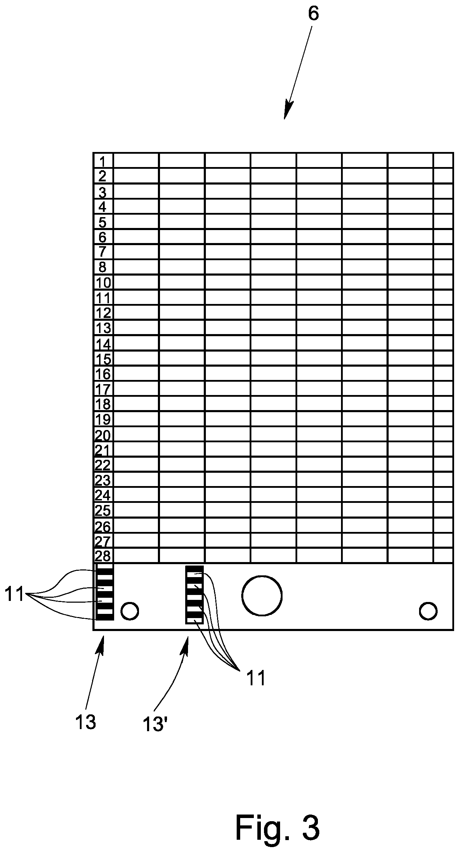

Die Kennzeichnung 13 des Bedruckungsobjekts 6 kann dabei ebenfalls als Strichcode-Kennzeichnung ausgebildet sein, wie dies bei dem Ausführungsbeispiel gemäß Fig. 3 der Fall ist. Hier ist ein US-Material als Bedruckungsobjekt 6 dargestellt, bei dem darüber hinaus eine zweite Kennzeichnung 13' vorgesehen ist, die parallel zur ersten Kennzeichnung 13 auf dem Bedruckungsobjekt 6 angeordnet ist, wobei die beiden Strichcode-Kennzeichnungen 13, 13' um 180° verdreht zueinander angeordnet sind. Zur gleichzeitigen, redundanten Erfassung der beiden Strichcode-Kennzeichnungen 13, 13' sind im Gehäuse 2 des Druckers 1 dann zwei optische Sensoren 12 nebeneinander angeordnet.

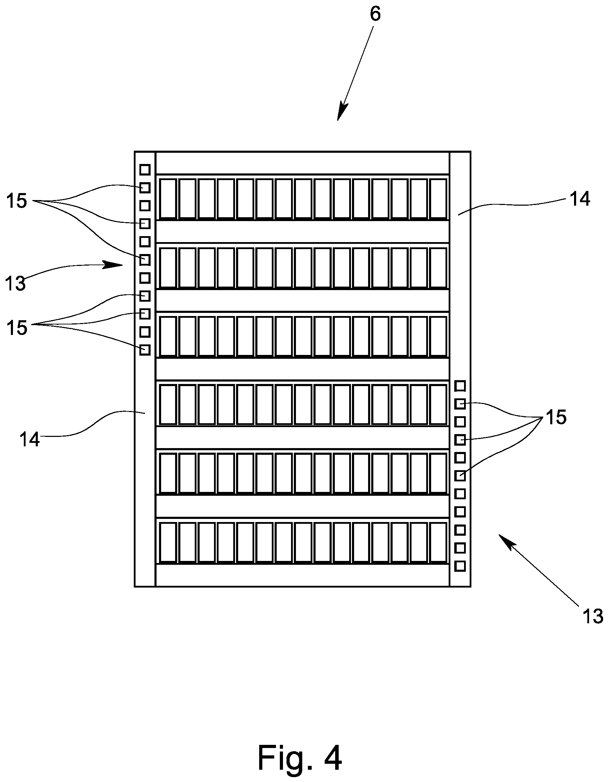

Bei dem Ausführungsbeispiel des Bedruckungsobjekt 6 gemäß Fig. 4, die ein UC-Material zeigt, ist die Kennzeichnung 13 als Lochmuster ausgebildet, d. h. im Randbereich 14 des Bedruckungsobjekts 6 können an vorgegebenen Positionen freie Löcher 15 ausgebildet sein. Bei einer als Lochmuster ausgebildeten Kennzeichnung 13 wird als optischer Sensor 12 vorzugsweise eine Lichtschranke verwendet, so dass mittels der Lichtschranke feststellbar ist, ob an den vorgegebenen Positionen ein Loch 15 ausgebildet ist oder nicht. Ist an einer vorgegebenen Position ein Loch 15 ausgebildet, so gelangt ein vom Sender der Lichtschranke ausgesandter Lichtstrahl durch das Loch 15 zum gegenüberliegenden Empfänger der Lichtschranke. Ist an einer vorgegebenen Position dagegen kein Loch 15 ausgebildet, so wird der vom Sender ausgesandte Lichtstrahl durch das Material des Randbereichs 14 des Bedruckungsobjekts 6 unterbrochen, so dass er nicht zum gegenüberliegenden Empfänger der Lichtschranke gelangt.

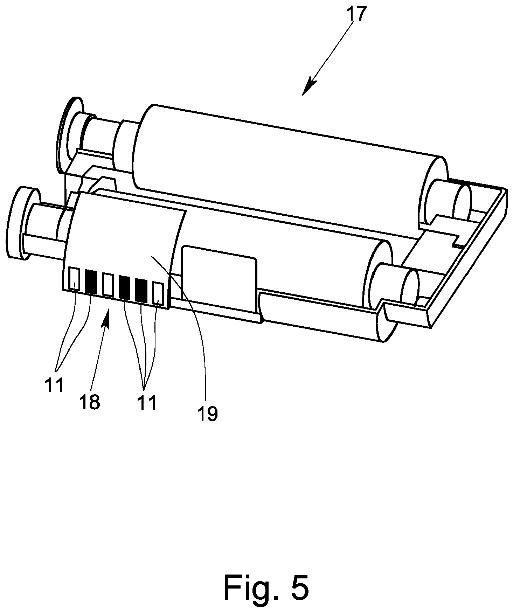

Bei der bevorzugten Ausgestaltung des erfindungsgemäßen Druckers 1 sind neben dem Sensor 9 für das Magazin 5 und dem Sensor 12 für das Bedruckungsobjekt 6 noch mehrere weitere Sensoren 16 zur Erkennung einer an der auswechselbaren Druckerkassette 17 angebrachten Kennzeichnung 18 angeordnet. Da eine in das Gehäuse 2 des Druckers 1 eingesetzte Druckerkassette 17 dort stationär angeordnet ist, sich also nicht mit der Aufnahmevorrichtung 4 bewegt, sind zur Erkennung der ebenfalls als Strichcode ausgebildeten Kennzeichnung 18 der Druckerkassette 17 mehrere optische Sensoren 16 in Längserstreckung der Kennzeichnung 18 nebeneinander im Gehäuse 2 angeordnet. Die optischen Sensoren 16, die bei der Darstellung gemäß Fig. 1b in der Zeichnungsebene hintereinander angeordnet sind, dienen jeweils zur Erfassung eines Einzelstrichs 11 der Strichcode-Kennzeichnung 18 der Druckerkassette 17. Wie aus Fig. 5 erkennbar ist, kann die Kennzeichnung 18 der Druckerkassette 17 einfach auf einem Etikett 19 aufgebracht sein, das an einer vorgegebenen Position an der Druckerkassette 17 aufgeklebt ist. Auf dem Etikett 19 können dann vorzugsweise zusätzlich die Artikelbezeichnung, die Artikelnummer und gegebenenfalls ein Logo aufgebracht sein.

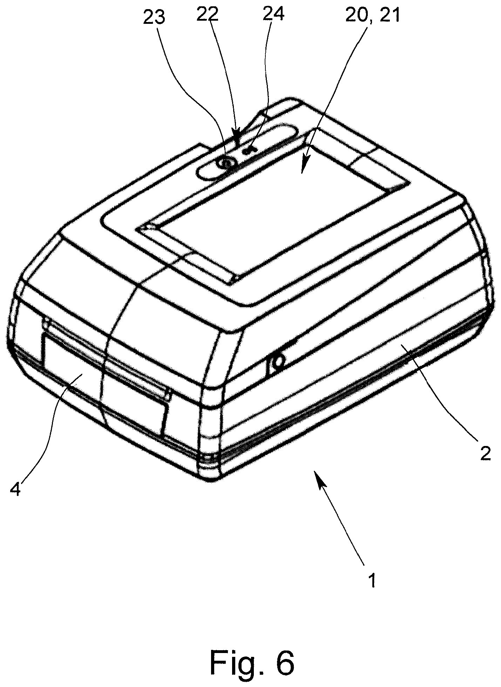

Fig. 6 zeigt eine perspektivische Darstellung einer bevorzugten Ausgestaltung eines erfindungsgemäßen Druckers 1 als Thermotransferdrucker. Der Drucker 1 ist dabei als portables Gerät ausgebildet, das aufgrund seines geringen Gewichtes von weniger als 10 kg und seiner geringen Grundfläche, die in etwa den Abmessungen eines DIN-A 4 Blattes entspricht, vom Benutzer bedarfsweise an unterschiedliche Einsatzorte platziert werden kann. Zur Durchführung eines gewünschten Druckauftrages weist der Drucker 1 an seiner Oberseite ein Display 20 sowie eine Tastatur 21 auf, mit der die Kennzeichnung des zu bedruckenden Bedruckungsobjekts 6 sowie gegebenenfalls die Druckdaten eingegeben werden können. Anstelle eines Displays 20 und einer separaten Tastatur 21 weist der Drucker 1 vorzugsweise ein Touchscreen auf, welches die Funktion von Display und Tastatur übernimmt.

Aus der perspektivischen Darstellung des Druckers 1 in Fig. 6 ist darüber hinaus ersichtlich, dass neben dem Touchscreen noch ein weiteres Bedienfeld 22 vorgesehen ist, in dem neben einem Ein/Aus-Schalter 23 auch eine Taste 24 zum Einfahren der Aufnahmevorrichtung 4 angeordnet ist. Das erfindungsgemäße Verfahren kann somit dadurch gestartet werden, dass nach dem Einlegen das Magazins 5 mit dem Bedruckungsobjekt 6 in die Aufnahmevorrichtung 4 die Taste 24 gedrückt wird, so dass die Aufnahmevorrichtung 4 in den Druckraum 3 im Gehäuse 2 einfährt.

## Patentansprüche

1. Verfahren zur Absicherung eines Druckprozesses mit einem Drucker (1), wobei der Drucker (1) ein Gehäuse (2), mit einem innerhalb des Gehäuses (2) ausgebildeten Druckraum (3), eine Druckvorrichtung, eine Aufnahmevorrichtung (4) für ein der Aufnahme des zu bedruckenden Bedruckungsobjekts (6) dienendes auswechselbares Magazin (5), eine Steuer- und Auswerteeinheit (7) und einen Speicher (8) aufweist,
wobei das Verfahren folgende Schritte umfasst:
• Einsetzen eines Magazins (5) in die Aufnahmevorrichtung (4), wobei sich die Aufnahmevorrichtung (4) in einer Be- und Entladeposition außerhalb des Druckraums (3) befindet
• Einfahren der Aufnahmevorrichtung (4) in den Druckraum (3), wobei ein in dem Gehäuse (2) angeordneter optischer Sensor (9) eine am Magazin (5) angeordnete Kennzeichnung (10) erfasst,
**dadurch gekennzeichnet, dass** das Magazin (5) mit dem zu bedruckenden Bedruckungsobjekt (6) in die Aufnahmevorrichtung (4) eingesetzt wird und dass das Verfahren zusätzlich die folgenden Schritte umfasst:
• Durchführen eines Vergleiches der vom Sensor (9) erfassten Kennzeichnung (10) des eingesetzten Magazins (5) mit einer im Speicher (8) gespeicherten Kennzeichnung für ein für das zu bedruckende Bedruckungsobjekt (6) zulässiges Magazin (5) in der Steuer- und Auswerteeinheit (7)
• Ausgeben einer Fehlermeldung, wenn die vom Sensor (9) erfasste Kennzeichnung (10) des eingesetzten Magazins (5) nicht mit der im Speicher (8) gespeicherten Kennzeichnung für ein zulässiges Magazin (5) übereinstimmt.

2. Verfahren nach Anspruch 1, **gekennzeichnet durch** folgende Schritte:
• Erfassen einer am Bedruckungsobjekt (6) angeordneten Kennzeichnung (13, 13') mittels eines in dem Gehäuse (2) angeordneten optischen Sensors (12) beim Einfahren der Aufnahmevorrichtung (4) in den Druckraum (3),
• Durchführen eines Vergleiches der vom Sensor (12) erfassten Kennzeichnung (13, 13') des eingelegten Bedruckungsobjekts (6) mit einer im Speicher (8) gespeicherten Kennzeichnung für das zu bedruckende Bedruckungsobjekt (6) in der Steuer- und Auswerteeinheit (7),
• Ausgeben einer Fehlermeldung, wenn die vom Sensor (12) erfasste Kennzeichnung (13, 13') des eingelegten Bedruckungsobjekts (6) nicht mit der im Speicher (8) gespeicherten Kennzeichnung für das zu bedruckende Bedruckungsobjekt (6) übereinstimmt.

3. Verfahren nach Anspruch 1 oder 2 **gekennzeichnet durch** folgende Schritte:
• Einsetzen einer auswechselbaren Druckerkassette (17) in das Gehäuse (2), wobei an der Druckerkassette (17) eine Kennzeichnung (18) angeordnet ist,
• Erfassen der Kennzeichnung (18) an der Druckerkassette (17) mittels mindestens eines im Gehäuse (2) angeordneten optischen Sensors (16),
• Durchführung eines Vergleichs der von dem mindestens einen optischen Sensor (16) erfassten Kennzeichnung (18) der eingesetzten Druckerkassette (17) mit einer im Speicher (8) gespeicherten Kennzeichnung für eine für das zu bedruckende Bedruckungsobjekt (6) zulässige Druckerkassette (17) in der Steuer- Auswerteeinheit (7),
• Ausgeben einer Fehlermeldung, wenn die vom Sensor (16) erfasste Kennzeichnung (18) der eingesetzten Druckerkassette (17) nicht mit der im Speicher (8) gespeicherten Kennzeichnung für eine zulässige Druckerkassette (17) übereinstimmt.

4. Verfahren nach einem der Ansprüche 1 bis 3, **dadurch gekennzeichnet, dass** keine Fehlermeldung ausgegeben und statt dessen die Initialisierung des Druckvorganges von der Steuer- und Auswerteeinheit (7) fortgesetzt wird, wenn der in der Steuer- Auswerteeinheit (7) durchgeführte mindestens eine Vergleich der Kennzeichnungen (10, 13, 13', 18) keine Abweichung ergeben habt.

5. Verfahren nach einem der Ansprüche 1 bis 4, **dadurch gekennzeichnet, dass** die Aufnahmevorrichtung (4) aus dem Druckraum (3) in die Be- und Entladeposition außerhalb des Druckraums (3) verfährt, wenn die vom Sensor (9) erfasste Kennzeichnung (10) des eingesetzten Magazins (5) bzw. die vom
Sensor (12) erfasste Kennzeichnung (13, 13') des eingelegten Bedruckungsobjekts (6) nicht mit der im Speicher (8) gespeicherten Kennzeichnung für ein zulässiges Magazin (5) bzw. für das zu bedruckende Bedruckungsobjekt (6) übereinstimmt.

6. Verfahren nach Anspruch 2 und nach einem der Ansprüche 3 bis 5, **dadurch gekennzeichnet,**
**dass** nach Festlegung des zu bedruckenden Bedruckungsobjekts (6) die Kennzeichnung des Bedruckungsobjekts (6) sowie die Kennzeichnungen des für das Bedruckungsobjekt (6) zulässigen Magazins (5) und der Druckerkassette (17) im Speicher (8) hinterlegt werden.

7. Drucker (1) zur Durchführung des Verfahrens nach einem der Ansprüche 1 bis 6, mit einem Gehäuse (2), mit einem innerhalb des Gehäuses (2) ausgebildeten Druckraum (3), mit einer Druckvorrichtung, mit einer Aufnahmevorrichtung (4) für ein auswechselbares Magazin (5) zur Aufnahme des zu bedruckenden Bedruckungsobjekts (6), mit einer Steuer- und Auswerteeinheit (7) und mit einem Speicher (8), wobei die Aufnahmevorrichtung (4) zwischen einer Be- und Entladeposition außerhalb des Druckraums (3) und einer Druckposition innerhalb des Druckraums (3) verfahrbar ist,
wobei in dem Gehäuse (2) mindestens ein optischer Sensor (9) zur Erfassung einer an einem in die Aufnahmevorrichtung (4) eingesetzten Magazin (5) angeordneten Kennzeichnung (10) vorgesehen ist und wobei die Steuer- und Auswerteeinheit (7) dazu ausgebildet ist, einen Vergleich der von dem Sensor (9) erfassten Kennzeichnung (10) des Magazins (5) mit einer im Speicher (8) gespeicherten Kennzeichnung für ein für das zu bedruckende Bedruckungsobjekt (6) zulässiges Magazin (5) durchzuführen, wobei eine Fehlermeldung ausgegeben wird, wenn der Vergleich eine Abweichung zwischen der erfassten Kennzeichnung und der gespeicherten Kennzeichnung (10) feststellt.

8. Drucker (1) nach Anspruch 7, **dadurch gekennzeichnet, dass** in dem Gehäuse (2) mindestens ein weiterer optischer Sensor (12) zur Erfassung einer am Bedruckungsobjekt (6) angeordneten Kennzeichnung (13, 13') vorgesehen ist.

9. Drucker (1) nach Anspruch 8, **dadurch gekennzeichnet, dass** der optische Sensor (9) zur Erfassung der am Magazin (5) angeordneten Kennzeichnung (10) und der mindestens eine optische Sensor (12) zur Erfassung der am Bedruckungsobjekt (6) angeordneten Kennzeichnung (13, 13') so zueinander angeordnet sind, dass ihre optischen Achsen im wesentlichen senkrecht zueinander verlaufen.

10. Drucker (1) nach einem der Ansprüche 7 bis 9, **dadurch gekennzeichnet, dass** in dem Gehäuse (2) mindestens ein weiterer optischer Sensor (16) zur Erfassung einer an einer auswechselbaren Druckerkassette (17) angeordneten Kennzeichnung (18) vorgesehen ist.

11. Drucker (1) nach Anspruch 10, **dadurch gekennzeichnet, dass** mehrere optische Sensoren (16) nebeneinander im Gehäuse (2) angeordnet sind, die jeweils zur Erfassung eines Einzelstriches (11) einer aus mehreren nebeneinander angeordneten Einzelstrichen (11) zusammengesetzten Strichcode-Kennzeichnung (18) der Druckerkassette (17) vorgesehen sind.

12. Drucker (1) nach einem der Ansprüche 7 bis 11, **dadurch gekennzeichnet, dass** die einzelnen optischen Sensoren (9, 12, 16) als Reflexlicht-Taster zur Erfassung jeweils einer Strichcode-Kennzeichnung (10, 13, 18) ausgebildet sind.

13. Drucker (1) nach einem der Ansprüche 7 bis 12, **dadurch gekennzeichnet, dass** ein Display (20) vorgesehen ist, wobei das Display (20) eine Fehlermeldung anzeigt, wenn die von dem Sensor (9, 12, 16) erfasste Kennzeichnung (10, 13, 13', 18) des Magazins (5), des Bedruckungsobjekts (6) bzw. der Druckerkassette (17) nicht mit der entsprechenden im Speicher (8) gespeicherten Kennzeichnung übereinstimmt.

## Claims

1. Method for securing a printing process using a printer (1), wherein the printer (1) has a housing (2) having a printing chamber (3) formed within the housing (2), a printing device, a holding device (4) for an exchangeable magazine (5), which serves to hold the print object (6) to be printed upon, a control and evaluation unit (7), and a memory (8),
wherein the method includes the following steps:
- inserting a magazine (5) into the holding device (4), wherein the holding device (4) is located in a loading and unloading position outside the printing chamber (3)
- moving the holding device (4) into the printing chamber (3), wherein an optical sensor (9) located in the housing (2) detects a marking (10) located on the magazine (5)
**characterized in that** the magazine (5) is inserted in the holding device (4) with the print object (6) to be printed and that the method additionally includes the following steps:
- performing a comparison, in the control and evaluation unit (7), of the marking (10) of the inserted magazine (5) detected by the sensor (9) with a marking stored in the memory (8) for a magazine (5) permissible for the print object (6) to be printed upon,
- issuing an error message when the marking (10) of the inserted magazine (5) detected by the sensor (9) does not match the marking stored in the memory (8) for a permissible magazine (5).

2. Method according to claim 1, **characterized by** the following steps:
- detecting a marking (13, 13') located on the print object (6) by means of an optical sensor (12) located in the housing (2) when the holding device (4) is moved into the printing chamber (3),
- performing a comparison, in the control and evaluation unit (7), of the marking (13, 13') of the inserted print object (6) detected by the sensor (12) with a marking stored in the memory (8) for the print object (6) to be printed upon,
- issuing an error message when the marking (13, 13') of the inserted print object (6) detected by the sensor (12) does not match the marking stored in the memory (8) for the print object (6) to be printed upon.

3. Method according to claim 1 or 2, **characterized by** the following steps:
- inserting an exchangeable printer cassette (17) into the housing (2), wherein a marking (18) is located on the printer cassette (17),
- detecting the marking (18) on the printer cassette (17) by means of at least one optical sensor (16) located in the housing (2),
- performing a comparison, in the control and evaluation unit (7), of the marking (18) of the inserted printer cassette (17) detected by at least one optical sensor (16) with a marking stored in the memory (8) for a printer cassette (17) permissible for the print object (6) to be printed upon,
- issuing an error message when the marking (18) of the inserted printer cassette (17) detected by the sensor (16) does not match the marking stored in the memory (8) for a permissible printer cassette (17).

4. Method according to any one of claims 1 to 3, **characterized in that** an error message is not issued and instead the initialization of the printing process is continued by the control and evaluation unit (7), when the at least one comparison of the markings (10, 13, 13', 18) carried out in the control and evaluation unit (7) does not result in a difference.

5. Method according to any one of claims 1 to 4, **characterized in that** the holding device (4) moves out of the printing chamber (3) into the loading and unloading position outside the printing chamber (3) when the marking (10) of the inserted magazine (5) detected by the sensor (9) or, respectively, the marking (13, 13') of the inserted print object (6) detected by the sensor (12) does not match the marking stored in the memory (8) for a permissible magazine (5) or for the print object (6) to be printed upon.

6. Method according to claim 2 and any one of claims 3 to 5, **characterized in that** after determining the print object (6) to be printed upon, the marking of the print object (6) and the markings of the magazine (5) permissible for the print object (6) and of the printer cassette (17) are stored in the memory (8).

7. Printer (1) for carrying out the method according to any one of claims 1 to 6, with a housing (2), with a printing chamber (3) formed within the housing (2), with a printing device, with a holding device (4) for an exchangeable magazine (5), which serves to hold the print object (6) to be printed upon, with a control and evaluation unit (7), and with a memory (8), wherein the holding device (4) can be moved between a loading and unloading position outside the printing chamber (3) and a printing position within the printing chamber (3),
wherein, in the housing (2), there is at least one optical sensor (9) for detecting a marking (10) located on a magazine (5) inserted into the holding device (4), and
wherein the control and evaluation unit (7) is designed for comparing the marking (10) of the magazine (5) detected by the sensor (9) to a marking stored in the memory (8) for a magazine (5) permissible for the print object (6) to be printed upon, wherein an error message is issued when the comparison results in a difference between the detected marking and the stored marking (10).

8. Printer (1) according to claim 7, **characterized in that**, in the housing (2), there is at least one further optical sensor (12) for detecting a marking (13, 13') located on the print object (6).

9. Printer (1) according to claim 8, **characterized in that** the optical sensor (9) for detecting the marking (10) located on the magazine (5) and the at least one optical sensor (12) for detecting the marking (13, 13') located on the print object (6) are arranged to one another such that their optical axes run essentially perpendicular to one another.

10. Printer (1) according to any one of claims 7 to 9, **characterized in that**, in the housing (2), there is at least one further optical sensor (16) for detecting a marking (18) which is located on an exchangeable printer cassette (17).

11. Printer (1) according to claim 10, **characterized in that** there are several optical sensors (16) arranged next to one another in the housing (2) which each are designed to detect an individual line (11) of a bar code marking (18) of the printer cassette (17), which bar code marking is composed of several individual lines (11) located next to one another.

12. Printer (1) according to any one of claims 7 to 11, **characterized in that** the individual optical sensors (9, 12, 16) are made as reflex light scanners for detecting one bar code marking (10, 13, 18) at a time.

13. Printer (1) according to any one of claims 7 to 12, **characterized in that** there is a display (20), wherein the display (20) displays an error message when the marking (10, 13, 13', 18) of the magazine (5), of the print object (6) or, respectively, of the printer cassette (17) detected by the sensor (9, 12, 16) does not match the corresponding marking stored in the memory (8).

## Revendications

1. Procédé de sécurisation d'un processus d'impression avec une imprimante (1), l'imprimante (1) comprenant un boîtier (2) pourvu d'un espace d'impression (3) formé à l'intérieur du boîtier (2), un dispositif d'impression, un dispositif de réception (4) destiné à un magasin interchangeable (5) servant à recevoir l'objet d'impression (6) à imprimer, une unité de commande et d'évaluation (7) et une mémoire (8),
le procédé comprenant les étapes suivantes :
• insérer un magasin (5) dans le dispositif de réception (4), le dispositif de réception (4) se trouvant dans une position de chargement et de déchargement à l'extérieur de l'espace d'impression (3),
• introduire le dispositif de réception (4) dans l'espace d'impression (3), un capteur optique (9) disposé dans le boîtier (2) détectant un repère (10) disposé sur le magasin (5),
**caractérisé en ce que** le magasin (5) pourvu de l'objet d'impression (6) à imprimer est inséré dans le dispositif de réception (4) et **en ce que** le procédé comprend en outre les étapes suivantes :
• comparer le repère (10), détecté par le capteur (9), du magasin (5) inséré avec un repère mémorisé dans la mémoire (8) et relatif à un magasin (5), valable pour l'objet d'impression (6) à imprimer, dans l'unité de commande et d'évaluation (7),
• délivrer un message d'erreur si le repère (10), détecté par le capteur (9), du magasin (5) inséré ne coïncide pas avec le repère mémorisé dans la mémoire (8) et relatif à un magasin valable (5).

2. Procédé selon la revendication 1, **caractérisé par** les étapes suivantes :
• détecter un repère (13, 13'), disposé sur l'objet d'impression (6), à l'aide d'un capteur optique (12) disposé dans le boîtier (2) lorsque le dispositif de réception (4) est introduit dans l'espace d'impression (3),
• comparer le repère (13, 13'), détecté par le capteur (12), de l'objet d'impression inséré (6) avec un repère, mémorisé dans la mémoire (8) et relatif à l'objet d'impression (6) à imprimer, dans l'unité de commande et d'évaluation (7),
• délivrer un message d'erreur si le repère (13, 13'), détecté par le capteur (12), de l'objet d'impression inséré (6) ne coïncide pas avec le repère mémorisé dans la mémoire (8) et relatif à l'objet d'impression (6) à imprimer.

3. Procédé selon la revendication 1 ou 2, **caractérisé par** les étapes suivantes :
• insérer une cartouche d'imprimante interchangeable (17) dans le boîtier (2), un repère (18) étant disposé sur la cartouche d'imprimante (17),
• détecter le repère (18) sur la cartouche d'imprimante (17) à l'aide d'au moins un capteur optique (16) disposé dans le boîtier (2),
• comparer le repère (18), détecté par l'au moins un capteur optique (16), de la cartouche d'imprimante insérée (17) avec un repère mémorisé dans la mémoire (8) et relatif à une cartouche d'imprimante (17), valable pour l'objet d'impression (6) à imprimer, dans l'unité de commande et d'évaluation (7),
• délivrer un message d'erreur lorsque le repère (18), détecté par le capteur (16), de la cartouche d'imprimante insérée (17), ne coïncide pas avec le repère mémorisé dans la mémoire (8) et relatif à une cartouche d'imprimante valable (17).

4. Procédé selon l'une des revendications 1 à 3, **caractérisé en ce qu'**aucun message d'erreur n'est délivré et, à la place, l'initialisation du processus d'impression de l'unité de commande et d'évaluation (7) est poursuivie lorsque l'au moins une comparaison des repères (10, 13, 13', 18), effectuée dans l'unité de commande et d'évaluation (7), n'a pas donné d'écart.

5. Procédé selon l'une des revendications 1 à 4, **caractérisé en ce que** le dispositif de réception (4) est déplacé de l'espace d'impression (3) jusque dans la position de chargement et de déchargement à l'extérieur de l'espace d'impression (3) lorsque le repère (10), détecté par le capteur (9), du magasin (5) inséré ou le repère (13, 13'), détecté par le capteur (12), de l'objet d'impression inséré (6) ne coïncide pas avec le repère, mémorisé dans la mémoire (8), relatif à un magasin valable (5) ou à l'objet d'impression (6) à imprimer.

6. Procédé selon la revendication 2 et selon l'une des revendications 3 à 5, **caractérisé en ce que**, une fois que l'objet d'impression (6) à imprimer a été spécifié, le repère de l'objet d'impression (6) et les repères du magasin (5), valable pour l'objet d'impression (6), et de la cartouche d'imprimante (17) sont mémorisés dans la mémoire (8).

7. Imprimante (1) destinée à mettre en œuvre le procédé selon l'une des revendications 1 à 6, l'imprimante comprenant un boîtier (2), un espace d'impression (3) formé à l'intérieur du boîtier (2), un dispositif d'impression, un dispositif de réception (4) destiné à un magasin interchangeable (5) servant à recevoir l'objet d'impression (6) à imprimer, une unité de commande et d'évaluation (7) et une mémoire (8), le dispositif de réception (4) étant déplaçable entre une position de chargement et de déchargement à l'extérieur de l'espace d'impression (3) et une position d'impression dans l'espace d'impression (3), au moins un capteur optique (9) étant prévu dans le boîtier (2) pour détecter un repère (10) disposé sur un magasin (5) inséré dans le dispositif de réception (4) et l'unité de commande et d'évaluation (7) étant conçue pour comparer le repère (10), détecté par le capteur (9), du magasin (5) avec un repère mémorisé dans la mémoire (8) et relatif à un magasin (5) valable pour l'objet d'impression (6) à imprimer, un message d'erreur étant délivré lorsque la comparaison détermine un écart entre le repère détecté et le repère (10) mémorisé.

8. Imprimante (1) selon la revendication 7, **caractérisée en ce qu'**au moins un capteur optique supplémentaire (12) est prévu dans le boîtier (2) pour détecter un repère (13, 13') disposé sur l'objet d'impression (6).

9. Imprimante (1) selon la revendication 8, **caractérisée en ce que** le capteur optique (9) destiné à détecter le repère (10) disposé dans le magasin (5) et l'au moins un capteur optique (12) destiné à détecter le repère (13, 13') disposé sur l'objet d'impression (6) sont disposés l'un par rapport à l'autre de sorte que leurs axes optiques soient sensiblement perpendiculaires entre eux.

10. Imprimante (1) selon l'une des revendications 7 à 9, **caractérisée en ce qu'**au moins un capteur optique supplémentaire (16) est prévu dans le boîtier (2) pour détecter un repère (18) disposé sur une cartouche d'imprimante interchangeable (17).

11. Imprimante (1) selon la revendication 10, **caractérisée en ce qu'**une pluralité de capteurs optiques (16) sont disposés côte à côte dans le boîtier (2), lesquels sont destinés chacun à détecter une barre individuelle (11) d'un repère à code à barres (18), comprenant une pluralité de barres individuelles juxtaposées (11), de la cartouche d'imprimante (17).

12. Imprimante (1) selon l'une des revendications 7 à 11, **caractérisée en ce que** les capteurs optiques individuels (9, 12, 16) sont conçus comme un palpeur à lumière réflexe destiné à détecter un repère à code à barres respectif (10, 13, 18).

13. Imprimante (1) selon l'une des revendications 7 à 12, **caractérisée en ce qu'**il est prévu un dispositif d'affichage (20), le dispositif d'affichage (20) affichant un message d'erreur lorsque le repère (10, 13, 13', 18), détecté par le capteur (9, 12, 16), du magasin (5), de l'objet d'impression (6) ou de la cartouche d'imprimante (17) ne coïncide pas avec le repère correspondant mémorisé dans la mémoire (8).
